# EUROPÄISCHE PATENTSCHRIFT

(11) **EP 0 536 587 B1**
(45) Veröffentlichungstag und Bekanntmachung des Hinweises auf die Patenterteilung: **18.03.1998**
(21) Anmeldenummer: 92116218.6
(22) Anmeldetag: 23.09.1992
(51) Int. Cl.: C08K 3/00, B41M 5/26

(54) **Anorganische Nebengruppenmetallthiocyanate enthaltende thermoplastische Polyester-Formmassen**
Thermoplastic polyester molding compositions containing inorganic transition metal thiocyanats
Compositions de polyéster moulage thermoplastiques contenant des thiocyanates de métaux transitoires inorganiques

(30) Priorität: 05.10.1991 DE 4133124
(43) Veröffentlichungstag der Anmeldung: 14.04.1993
(73) Patentinhaber: BASF Aktiengesellschaft, 67063 Ludwigshafen (DE)
(72) Erfinder: Plachetta, Christoph, Dr., W-6703 Limburgerhof (DE); Schlichting, Karl, Dr., W-6712 Bobenheim-Roxheim (DE); Welz, Martin, W-6702 Bad Duerkheim (DE); Bright, Theresa Anne, Dr., W-6800 Mannheim 1 (DE)

(56) Entgegenhaltungen:
- EP-A- 0 400 305
- DE-B- 1 169 122
- GB-A- 1 186 236
- US-A- 4 055 538
- US-A- 4 687 802

## Beschreibung

Die vorliegende Erfindung betrifft thermoplastische Formmassen, enthaltend als wesentliche Komponenten
A) 30 bis 99,995 Gew.-% eines thermoplastischen Polyesters
B) 0,005 bis 5 Gew.-% eines Nebengruppenmetallthiocyanats
und
C) 0 bis 69,995 Gew.-% faser- oder teilchenförmige Füllstoffe oder deren Mischungen.

Außerdem betrifft die Erfindung die Verwendung dieser thermoplastischen Formmassen zur Herstellung von laserbeschriftbaren Formkörpern sowie die hierbei erhältlichen laserbeschriftbaren Formkörper aus den thermoplastischen Formmassen.

Laserbeschriftbare Formkörper finden in vielen Bereichen Verwendung, beispielsweise in der Elektronik und in der Elektrik.

Aus der EP-A 190 997 ist ein Verfahren zur Beschriftung von hochmolekularem organischem Material bekannt, wobei als Zusatzstoffe bestimmte anorganische oder organische Pigmente oder polymerlösliche Farbstoffe verwendet werden. Derartige Materialien weisen jedoch gegenüber Produkten ohne Zusatzstoffe schlechtere mechanische und schlechtere Verarbeitungseigenschaften auf.

Den gleichen Nachteil zeigen die in der DE-A 39 17 294 beschriebenen mit Laserlicht beschriftbaren hochpolymeren Materialien, denen als Zuschlagstoffe Kupferhydroxidphosphat, Molybdänoxid oder Titandioxid hinzugefügt wurde.

Aufgabe der vorliegenden Erfindung war es daher thermoplastische Formmassen zur Verfügung zu stellen, die zur Herstellung von laserbeschriftbaren Formkörpern geeignet sind und gleichzeitig gute mechanische und gute Verarbeitungseigenschaften aufweisen.

Die Aufgabe wird erfindungsgemäß gelöst durch die eingangs definierten thermoplastischen Formmassen. Außerdem wurden die hierbei erhältlichen laserbeschriftbaren Formkörper aus den thermoplastischen Formmassen gefunden.

Als Komponente A) enthalten die erfindungsgemäßen thermoplastischen Formmassen 30 bis 99,995 Gew.-%, vorzugsweise 40 bis 99,99 Gew.-% und insbesondere 50 bis 99,95 Gew.-% eines thermoplastischen Polyesters.

Thermoplastische Polyester sind an sich bekannt. Vorzugsweise werden Polyester verwendet, die einen aromatischen Ring in der Hauptkette enthalten. Der aromatische Ring kann auch substituiert sein, z. B. durch Halogene, wie Chlor und Brom und/oder durch C₁- bis C₄-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer C₂- bis C₆-Diolkomponente, z.B. Polyethylenterephthalat, Polyethylennaphthalat, Polypropylenterephthalat oder Polybutylenterephthalat oder deren Mischungen werden besonders bevorzugt.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (Du Pont).

Als Komponente B) enthalten die erfindungsgemäßen thermoplastischen Formmassen 0,005 bis 5 Gew.-%, vorzugsweise 0,01 bis 2 Gew.-% und insbesondere 0,05 bis 1 Gew.-% eines Nebengruppenmetallthiocyanats.

Von den anorganischen Nebengruppenmetallthiocyanaten haben sich diejenigen als besonders geeignet erwiesen, bei denen das Nebengruppenmetall eine Elektronenkonfiguration d⁶ bis d¹⁰ aufweist, bevorzugt d⁹, also Cu, Ag, Au, insbesondere Cu und Ag.

Darüberhinaus können die erfindungsgemäßen thermoplastischen Formmassen als Komponente C) 0 bis 69,995 Gew.-%, bevorzugt 0 bis 50 Gew.-% faser- oder teilchenförmige Füllstoffe oder deren Mischungen enthalten. Dies sind in der Regel übliche Zusatzstoffe und Verarbeitungshilfsmittel wie Stabilisatoren, Oxidationsverzögerer, Mittel gegen Wärmezersetzung, Färbemittel wie Farbstoffe und Pigmente, faser- und pulverförmige Füll- und Verstärkungsmittel, Keimbildungsmittel und Weichmittel.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Iodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt 20 bis 35 Gew.-%.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Weiterhin können die erfindungsgemäßen thermoplastischen Formmassen 0 bis 60, vorzugsweise 0 bis 40 Gew.-% eines schlagzäh modifizierenden Polymeren (im folgenden auch als kautschukelastisches Polymerisat oder Elastomer bezeichnet) enthalten.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²) =C(COOR³)R⁴ (I)

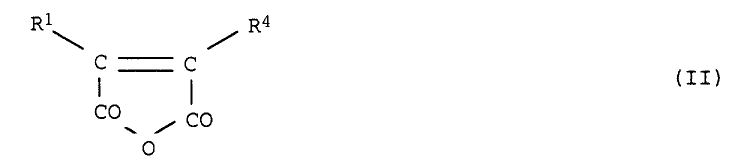

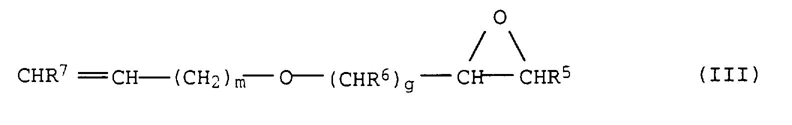

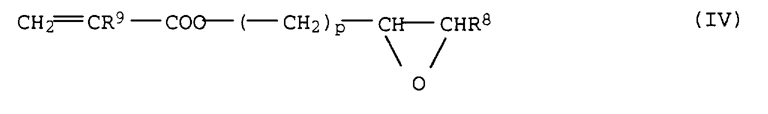

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 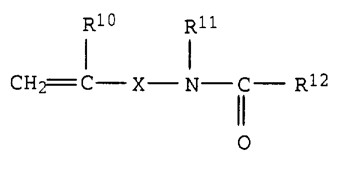 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 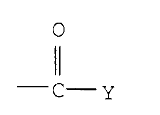
- Y: O-Z- oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butyl-acrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Die erfindungsgemäßen thermoplastischen Formmassen können weiterhin Flammschutzmittel enthalten, die in der Regel in Mengen von 0 bis 30 Gew.-% eingesetzt werden.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Ein bevorzugtes Flammschutzmittel ist elementarer Phosphor. In der Regel kann der elementare Phosphor mit z.B. Polyurethanen oder anderen Aminoplasten phlegmatrisiert oder gecoated werden. Außerdem sind Konzentrate von rotem Phosphor z.B. in einem Polyamid, Elastomeren oder Polyolefin geeignet.

Besonders bevorzugt ist 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Weitere Phosphorverbindungen wie organische Phosphorsäure, Phosphinate, Phosphonate, Phosphinite, Phoshinoxide, Phosphine, Phosphine, Phosphite oder Phosphate sind ebenfalls bevorzugt. Als Beispiel sei Triphenylphosphinoxid genannt. Dieses kann allein oder vermischt mit rotem Phosphor verwendet werden.

Typische für die bevorzugten Phosphorverbindungen, die gemäß in der vorliegenden Erfindung verwendet werden können, sind solche der folgenden allgemeinen Formel 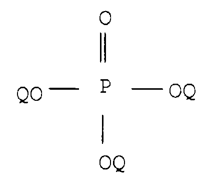 worin Q für gleiche oder verschiedene Reste Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl- bis-(3-5,5'-trimethylhexylphosphat), Ethyldiphenylphosphat, 2-Ethylhexyldi(p-tolyl)phosphat, Diphenylhydrogenphosphat, Bis-(2-ethylhexyl)phenylphosphat, Tri(nonylphenyl)phosphat, Phenylmethylhydrogenphosphat, Triphenylphosphat, Dibutylphenylphosphat und Diphenylhdrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Triphenylphosphinoxid bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Die Flammschutzmittel können gegebenenfalls gemeinsam mit einem Synergisten eingesetzt werden, wobei Metalloxide, Metallborate oder deren Mischungen bevorzugt sind. Als Metalloxide sind allgemein Zinkoxide, Bleioxide, Eisenoxide, Aluminiumoxide, Zinnoxide, Magnesiumoxide oder deren Mischungen geeignet. Bevorzugt sind Antimontrioxid und Antimonpentoxid sowie deren Mischungen. Geeignete Metallborate sind Borate von Metallen der 1. bis 3. Hauptgruppe des Periodensystems sowie der 1. bis 8. Nebengruppe, wobei wasserfreie Zinkborate bevorzugt sind. Bevorzugt wird eine Mischung aus Antimontrioxid mit wasserfreiem Zinkborat verwendet. Die Menge an Synergisten liegt in der Regel im Bereich von 0 bis 30 Gew.-%, bezogen auf die thermoplastische Formmasse.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen je nach eingesetzten thermoplastischen Polymeren üblicherweise im Bereich von 180 bis 300°C.

Die erfindungsgemäßen thermoplastischen Formmassen zeichnen sich durch gute mechanische und gute Verarbeitungseigenschaften aus und eignen sich besonders zur Herstellung von laserbeschriftbaren Formmkörpern.

### Beispiele

### Beispiel 1 und Vergleichsbeispiele V1 bis V3

99,9 Gew.-% eines Polybutylenterephthalats (PBT) mit einer Viskositätszahl von 130 ml/g, gemessen an einer 0,5 gew.-%igen Lösung in Phenol und o-Dichlorbenzol (Gew.-Verhältnis 1:1) bei 23°C (Ultradur® B 4500 der BASF AG) wurden jeweils mit 0,1 Gew.-% CuCl (Beispiel 1V), CuBr (Beispiel 2V), CuSO₄ (wasserfrei) (Beispiel 3V) und CuSCN (Beispiel 1) auf einem Zweischneckenextruder (ZSK 53 von Werner & Pfleiderer) bei 260°C gemischt, extrudiert, gekuhlt und granuliert.

### Vergleichsbeispiel V4

Es wurden 100 Gew.-% des in den Beispielen 1 bis 4 verwendeten Polybutylenterephthalats extrudiert, gekühlt und granuliert.

Der Elastizitätsmodul (E-Modul) wurde nach DIN 53 457 bestimmt, die Zugfestigkeit σ_{B} nach DIN 53 455. Die Bestimmung der Kerbschlagzähigkeit aₖ erfolgte nach DIN 53 453 bei 23°C, die Temperatur des Kristallisationsbeginns T_{KB} wurde aus DSC (Differential Scanning Calorimetry)-Messungen ermittelt. Der Schmelzindex MVI (Melt Volume Index) wurde bei 250°C und 2,16 kg Belastung nach DIN 53 753 bestimmt.

### Laserbeschriftung

Die Laserbeschriftung erfolgte nach dem Vektorverfahren, wobei ein Laserstrahl durch zwei computergesteuerte, durch Galvanometer bewegte Drehspiegel so abgelenkt wurde, daß in der Beschriftungsebene (= Brennebene des Fokussierobjektes) die gewünschte Schrift gezeichnet wurde. Als Laserquelle wurde ein 50 W Multimode Nd: YAG Festkörperlaser mit einer Wellenlänge von 1,06 µm eingesetzt. Der Strahldurchmesser im Fokus lag bei 100 µm. Die Kontrastbestimmung erfolgte visuell, wobei die Beurteiung von 1 (sehr gut) bis 6 (sehr schlecht) reicht.

Die Zusammensetzungen und Eigenschaften sind in der Tabelle 1 zusammengestellt.

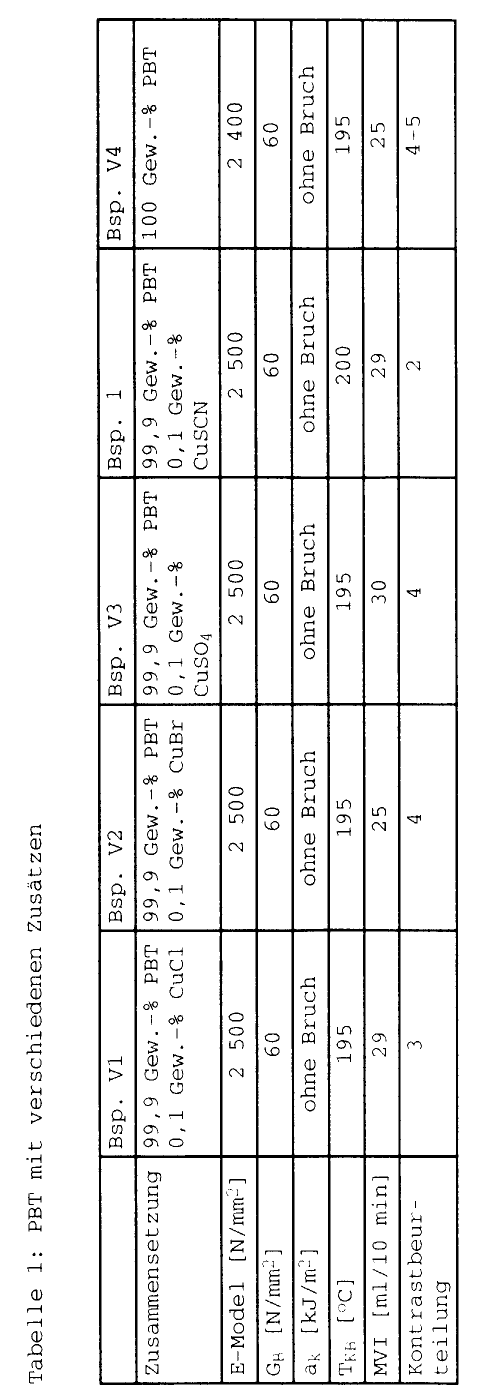

### Beispiele 2 bis 5

Ein Polybutylenterephthalat (PBT) mit einer Viskositäszahl von 124 ml/g, gemessen an einer 0,5 gew.-%igen Lösung in Phenol und o-Dichlorbenzol (Gew.-Verhältnis 1:1) bei 23°C (Ultradur® 4520 der BASF AG) wurde mit unterschiedlichen Mengen an CuSCN wie in Beispiel 1 beschrieben, verarbeitet.

### Vergleichsbeispiel V5

Es wurden 100 Gew.-% des in den Beispielen 5 bis 8 verwendeten Polybutylenterephthalats extrudiert, gekühlt und granuliert.

Die Viskositätszahlen VZ wurden wie in den Beispielen 5 bis 8 für das Polybutylenterephthalat beschrieben, ermittelt. Die Kontrastbeurteilung erfolgte wie unter den Beispielen 1 bis 4V beschrieben.

Die Zusammensetzungen und Eigenschaften sind in der Tabelle 2 zusammengestellt.

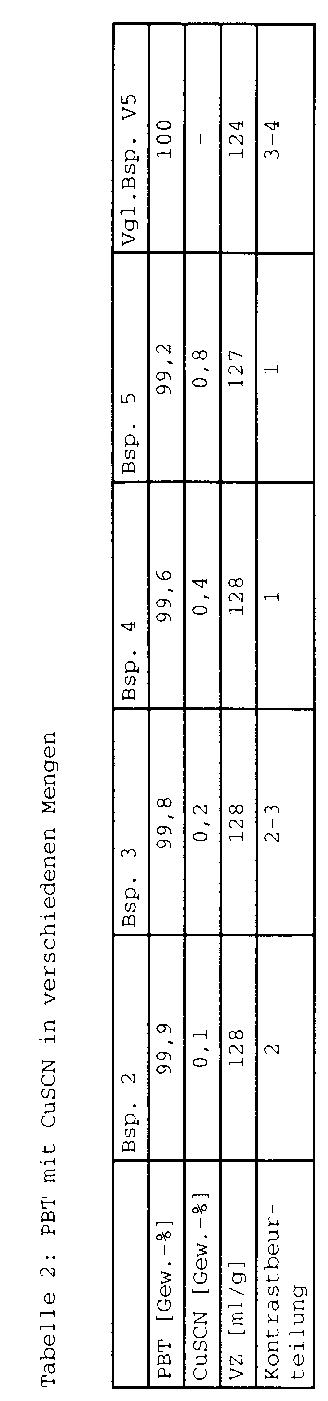

## Patentansprüche

1. Thermoplastische Formmassen, enthaltend als wesentliche Komponenten
A) 30 bis 99,995 Gew.-% eines thermoplastischen Polyesters
B) 0,005 bis 5 Gew.-% eines Nebengruppenmetallthiocyanats
und
C) 0 bis 69,995 Gew.-% faser- oder teilchenförmige Füllstoffe oder deren Mischungen.

2. Thermoplastische Formmassen nach Anspruch 1, dadurch gekennzeichnet, daß als Komponenten B) ein anorganisches Nebengruppenmetallthiocyanat eingesetzt wird, wobei das Nebengruppenmetall eine Elektronenkonfiguration d⁶ bis d¹⁰ aufweist.

3. Thermoplastische Formmassen nach den Ansprüchen 1 oder 2, dadurch gekennzeichnet, daß als Komponenten B) ein anorganisches Nebengruppenmetallthiocyanat, ausgewählt aus der d⁹-Gruppe Cu, Ag, Au, eingesetzt wird.

4. Verwendung der thermoplastischen Formmassen gemäß den Ansprüchen 1 bis 3 zur Herstellung von laserbeschriftbaren Formkörpern.

5. Laserbeschriftbare Formkörper, erhältlich aus den thermoplastischen Formmassen gemäß den Ansprüchen 1 bis 3 als wesentliche Komponente.

## Claims

1. A thermoplastic molding material containing, as essential components,
A) from 30 to 99.995% by weight of a thermoplastic polyester,
B) from 0.005 to 5% by weight of a subgroup metal thiocyanate
and
C) from 0 to 69.995% by weight of fibrous or particulate fillers or a mixture thereof.

2. A thermoplastic molding material as claimed in claim 1, wherein an inorganic subgroup metal thiocyanate is used as component B), the subgroup metal having an electron configuration of from d⁶ to d¹⁰.

3. A thermoplastic molding material as claimed in claim 1 or 2, wherein an inorganic subgroup metal thiocyanate selected from the d⁹ group Cu, Ag and Au is used as component B).

4. The use of a thermoplastic molding material as claimed in any of claims 1 to 3 for the production of laser-inscribable moldings.

5. A laser-inscribable molding obtainable from a thermoplastic molding material as claimed in any of claims 1 to 3 as an essential component.

## Revendications

1. Masses à mouler thermoplastiques, qui contiennent, à titre de composants essentiels,
A) 30 à 99,995% en poids d'un polyester thermoplastique,
B) 0,005 à 5% en poids d'un thiocyanate d'un métal des groupes secondaires,
et
C) 0 à 69,995% en poids de charges fibreuses ou particulaires, ou de leurs mélanges.

2. Masses à mouler thermoplastiques suivant la revendication 1, caractérisées en ce que, à titre de composant B), on met en oeuvre un thiocyanate d'un métal inorganique des sous-groupes, où le métal des sous-groupes présente une configuration d'électrons d⁶ à d¹⁰.

3. Masses à mouler thermoplastiques suivant l'une quelconque des revendications 1 et 2, caractérisées en ce que l'on met en oeuvre, à titre de composant B), un thiocyanate d'un métal inorganique des sous-groupes, choisi parmi le groupe d⁹ Cu, Ag, Au.

4. Utilisation des masses à mouler thermoplastiques suivant l'une quelconque des revendications 1 à 3, pour la fabrication d'articles moulés sur lesquels on peut écrire au laser.

5. Articles moulés sur lesquels on peut écrire au laser, obtenus à partir des masses à mouler thermoplastiques suivant l'une quelconque des revendications 1 à 3, à titre de composant essentiel.
